# DEMANDE DE BREVET EUROPEEN

(11) **EP 0 605 305 A1**
(43) Date de publication de la demande: **06.07.1994**
(21) Numéro de dépôt: 93403167.5
(22) Date de dépôt: 24.12.1993
(51) Int. Cl.: H04B 3/44

(54) **Dispositif de téléalimentation pour équipement de communications**

(30) Priorité: 30.12.1992 FR 9215930
(71) Demandeur: ALCATEL CIT, F-75008 Paris (FR)
(72) Inventeur: Guiset, Mireille, Rue du Haras, F-91240 Saint Michel Sur Orge (FR); Noyon, Jacques, F-91940 Les Ulis (FR)
(74) Mandataire: El Manouni, Josiane

(57) **Abrégé**

Ce dispositif comporte deux branches (B'1, B'2) en parallèle dont l'une, dite première branche (B'1), comporte en série autant d'ensembles à diodes Zener, (DZ'11, DZ'12, DZ'13, DZ'14) que d'ensembles fonctionnels à alimenter et dont l'autre, dite deuxième branche (B'2), comporte une ou plusieurs diodes Zener (DZ'21, DZ'22, DZ'23, DZ'24), seules les diodes Zener de ladite première branche étant conductrices en fonctionnement normal, c'est-à-dire en l'absence de sur-intensité, et la ou les tensions d'alimentation des différents sous-ensembles d'un même ensemble fonctionnel étant prises aux bornes d'une même diode Zener, ou de mêmes diodes Zener d'un même ensemble à diodes Zener, de ladite première branche.

## Description

La présente invention concerne un dispositif de téléalimentation pour équipement électronique tel que par exemple un répéteur ou un régénérateur pour liaison de transmission.

On sait qu'un répéteur ou un régénérateur destiné à amplifier ou à régénérer les signaux transmis sur une liaison de transmission, comporte, dans le cas général d'une liaison comportant une pluralité de supports de transmission élémentaires répartis en plusieurs paires de supports de transmission élémentaires affectés chacun à un sens de transmission déterminé, une pluralité de répéteurs ou de régénérateurs élémentaires, destinés chacun à amplifier où à régénérer les signaux transmis sur un support de transmission élémentaire. Les répéteurs ou régénérateurs élémentaires, destinés à amplifier, ou à régénérer, les signaux transmis sur les deux supports de transmission élémentaires d'une même paire sont en outre regroupés fonctionnellement, pour former ce qui sera appelé dans ce qui suit un ensemble fonctionnel, les répéteurs ou régénérateurs élémentaires d'un même ensemble fonctionnel étant appelés dans ce qui suit sous-ensembles fonctionnels, et un tel regroupement fonctionnel correspondant par exemple à une mise en commun de certains organes tels que des organes de supervision par exemple.

L'invention n'est pas limitée à une telle application à des équipements électroniques constitués de répéteurs ou de régénérateurs, mais peut être utilisée dans toute application où lesdits équipements électroniques à téléalimenter pourraient ainsi être décomposés en ensembles fonctionnels et en sous-ensembles fonctionnels.

On considère en outre ici le cas d'ensembles fonctionnels alimentés en série par un courant dit de téléalimentation, et de sous-ensembles fonctionnels alimentés chacun par une ou plusieurs tensions formées à partir dudit courant de téléalimentation, cette ou ces tensions pouvant elles-mêmes être constituées par la ou les tensions aux bornes d'une diode Zener, ou de diodes Zener, parcourues par ledit courant de téléalimentation. Par exemple, si l'on doit fournir à chacun desdits sous-ensembles fonctionnels deux tensions d'alimentation, l'une positive, l'autre négative, ces tensions d'alimentation pourront être prises aux bornes de chacune des diodes Zener d'un ensemble de deux diodes Zener en série, dont le point commun constitue la tension de référence électrique pour ce sous-ensemble fonctionnel.

S'il n'était pas nécessaire de prévoir en outre une protection contre d'éventuelles surintensités dues notamment à une rupture accidentelle du câble véhiculant ledit courant de téléalimentation, en tenant par ailleurs compte du fait que le courant maximum toléré par les diodes Zener actuellement disponibles est inférieur à la surintensité qui résulterait notamment d'une telle rupture, on obtiendrait ainsi un dispositif de téléalimentation comportant, dans chaque équipement électronique à téléalimenter, une seule branche comportant elle-même autant d'ensembles à diodes Zener, comportant chacun une ou plusieurs diodes Zener, que d'ensembles fonctionnels à alimenter.

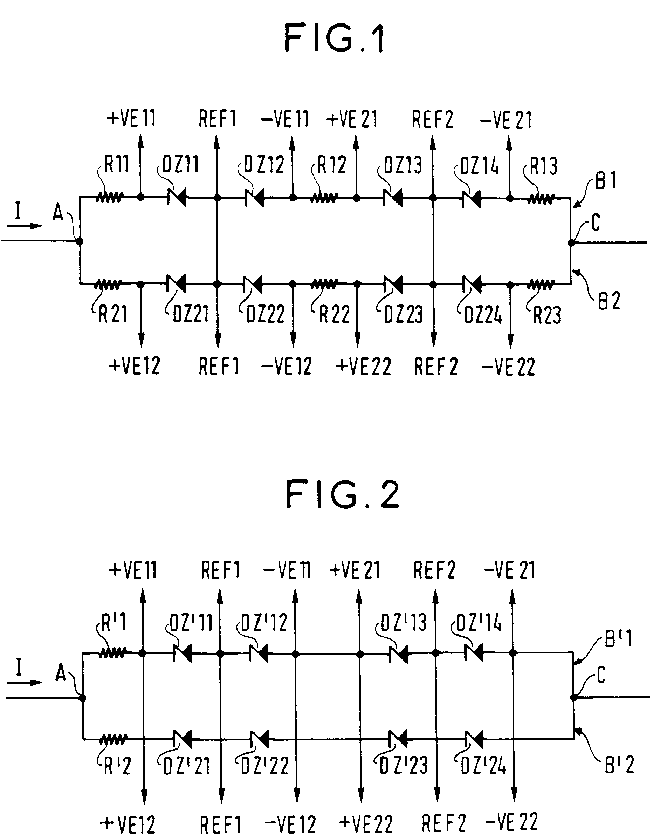

Un dispositif de téléalimentation du type ainsi rappelé et comportant en outre une protection contre de telles surintensités dues notamment à une rupture accidentelle du câble véhiculant ledit courant de téléalimentation, est illustré sur la figure 1. Ce dispositif correspond au cas de deux ensembles fonctionnels, notés respectivement E1 et E2 (bien que non illustrés expressément sur cette figure), comportant chacun deux sous-ensembles fonctionnels, notés respectivement E11 et E12 pour l'ensemble E1, et E21 et E22 pour l'ensemble E2 (bien que non illustrés expressément sur cette figure), et au cas où chacun de ces sous-ensembles fonctionnels nécessite, comme indiqué plus haut, deux tensions d'alimentation, l'une positive, l'autre négative, notées par exemple +VE11 et -VE11 pour le sous-ensemble fonctionnel E11.

Ce dispositif comporte deux branches repérées respectivement B1 et B2, entre lesquelles se partage le courant de téléalimentation, I, la branche B1 comportant dans cet exemple quatre diodes Zener, repérées respectivement DZ11, DZ12, DZ13 et DZ14, et la branche B2 comportant de même quatre diodes Zener, repérées respectivement DZ21, DZ22, DZ23 et DZ24, toutes les diodes Zener de ce dispositif ayant en outre une même tension de Zener (égale en l'occurrence, en valeur absolue, à la valeur absolue desdites tensions d'alimentation positive et négative).

Les tensions d'alimentation, positive et négative, des différents sous-ensembles fonctionnels sont alors prises de la façon suivante:
- la tension d'alimentation positive du sous-ensemble fonctionnel E11, notée +VE11, est prise aux bornes de la diode Zener DZ11,
- la tension d'alimentation négative du sous-ensemble fonctionnel E11, notée -VE11, est prise aux bornes de la diode Zener DZ12,
- la tension d'alimentation positive du sous-ensemble fonctionnel E12, notée + VE12, est prise aux bornes de la diode Zener DZ21,
- la tension d'alimentation négative du sous-ensemble fonctionnel E12, notée -VE12, est prise aux bornes de la diode Zener DZ22,
- la tension d'alimentation positive du sous-ensemble fonctionnel E21, notée +VE21, est prise aux bornes de la diode Zener DZ13,
- la tension d'alimentation négative du sous-ensemble fonctionnel E21, notée -VE21, est prise aux bornes de la diode Zener DZ14,
- la tension d'alimentation positive du sous-ensemble fonctionnel E22, notée +VE22, est prise aux bornes de la diode Zener DZ23,
- la tension d'alimentation négative du sous-ensemble fonctionnel E22, notée -VE22, est prise aux bornes de la diode Zener DZ24.

En outre, pour tenir compte du fait que les tensions de Zener des diodes Zener de ces deux branches, bien que théoriquement identiques, ne sont pas en pratique rigoureusement identiques, il est prévu des résistances dites d'équilibrage, permettant d'améliorer la répartition du courant entre les deux branches, en fonctionnement normal, mais surtout en cas de surintensité (prépondérance de la chute de tension dans ces résistances), et pour tenir compte du fait que le potentiel de référence électrique doit être commun aux différents sous-ensembles d'un même ensemble fonctionnel, c'est-à-dire que les diodes Zener DZ11, DZ12, DZ21 et DZ22 ainsi affectées à l'ensemble fonctionnel El présentent un point commun qui constitue le potentiel de référence, noté REF1, pour cet ensemble fonctionnel, et que de même les diodes Zener DZ13, DZ14, DZ23 et DZ24 ainsi affectées à l'ensemble fonctionnel E2 présentent un point commun, qui constitue le potentiel de référence, noté REF2, pour cet ensemble fonctionnel, ces résistances d'équilibrage sont en nombre égal à trois par branche, notées respectivement R11, R12 et R13 pour la branche B1, R21, R22 et R23 pour la branche B2.

Les résistances R11 et R21 sont en l'occurrence localisées sur celles des portions des branches B1 et B2 qui sont comprises entre l'une des extrémités de ces branches, notée A, et le point au potentiel de référence REF1, les résistances R12 et R22 sont en l'occurrence localisées sur celles des portions de ces branches qui sont comprises entre les points aux potentiels REF1 et REF2, et les résistances R13 et R23 sont en l'occurrence localisées sur celles des portions de ces branches qui sont comprises entre le point au potentiel REF2 et l'autre extrémité, C, de ces branches.

A titre d'exemple, correspondant plus particulièrement à l'application à la téléalimentation de répéteurs ou de régénérateurs, pour liaison de transmission, le courant de téléalimentation, noté I, a pour valeur 1,6A, la tension de Zener de ces diodes Zener a pour valeur 6,2V, et ces résistances d'équilibrage ont pour valeur 2 Ω.

Bien que ces résistances d'équilibrage aient une valeur relativement faible, on voit qu'avec un tel montage la différence de tension entre les deux points aux potentiels de référence REF1 et REF2 des deux ensembles fonctionnels E1 et E2 prend, en cas de coupure du câble véhiculant le courant de téléalimentation, une valeur très élevée, de l'ordre de 512V pour les valeurs numériques considérées et pour un courant de téléalimentation présentant, en pareil cas, une impulsion de l'ordre de 500A. Cette valeur très élevée complique la réalisation de l'isolement électrique entre ensembles fonctionnels, et rend par ailleurs difficilement envisageable toute communication électrique entre ensembles fonctionnels à l'intérieur d'un même équipement électronique.

Par ailleurs, toujours avec un tel montage et en dehors de tout problème d'agression en courant due notamment à une rupture du câble véhiculant le courant de téléalimentation, la chute de tension aux bornes du dispositif considéré comportant trois résistances d'équilibrage par branche, est, pour les valeurs numériques considérées, égale à (6,2V x 4) + (3 x 2Ω x 0,8A) soit 29,6V, soit une valeur relativement forte, entraînant des pertes par échauffement relativement fortes.

La présente invention a essentiellement pour but d'éviter tout ou partie des inconvénients précités.

La présente invention a pour objet un dispositif de téléalimentation pour équipement électronique, ledit équipement comportant un ou plusieurs ensembles fonctionnels alimentés en série par un courant dit de téléalimentation, chaque ensemble fonctionnel comportant à son tour une pluralité de sous-ensembles fonctionnels alimentés chacun en tension par une ou plusieurs tensions formées à partir dudit courant de téléalimentation, avec un même potentiel de référence pour les différents sous-ensembles d'un même ensemble fonctionnel, ledit dispositif comportant deux branches en parallèle dont l'une, dite première branche, comporte en série autant d'ensembles à diodes Zener, comportant chacun une ou plusieurs diodes Zener, que d'ensembles fonctionnels à alimenter, et ledit dispositif étant essentiellement caractérisé en ce que l'autre de ces branches, dite deuxième branche, comporte une ou plusieurs sous-branches en parallèle comportant chacune une ou plusieurs diodes Zener, le nombre de ces diodes Zener et leur tension de Zener étant, pour chaque sous-branche, déterminés, par rapport au nombre de diodes Zener et à la tension de Zener des diodes Zener de la première branche, de façon à ce que seules les diodes Zener de ladite première branche soient conductrices en fonctionnement normal, c'est-à-dire en l'absence de surintensité, et à ce que la ou les diodes Zener de chaque sous-branche soient conductrices seulement en présence d'une telle surintensité, et la ou les tensions d'alimentation des différents sous-ensembles d'un même ensemble fonctionnel étant prises aux bornes d'une même diode Zener, ou de mêmes diodes Zener d'un même ensemble à diodes Zener, de ladite première branche.

D'autres objets et caractéristiques de la présente invention apparaîtront à la lecture de la description suivante d'un exemple de réalisation, faite en relation avec les dessins ci-annexés, dans lesquels, outre la figure 1 déjà décrite et relative à l'art antérieur, les figures 2 et 3 illustrent des exemples de réalisation d'un dispositif de téléalimentation suivant l'invention.

Le dispositif de téléalimentation illustré sur la figure 2, et prévu dans un équipement électronique à téléalimenter, comporte deux branches, repérées B'1 et B'2, comportant chacune en l'occurrence quatre diodes Zener repérées respectivement DZ'11, DZ'12, DZ'13 et DZ'14 pour la branche B'1, et DZ'21, DZ'22, DZ'23 et DZ'24 pour la branche B'2, les diodes Zener DZ'11 et DZ'12 de la branche B'1 formant en l'occurrence un premier ensemble à diodes Zener, et les diodes Zener DZ'13 et DZ'14 de la branche B'1 formant en l'occurrence un second ensemble à diodes Zener.

La somme des tensions de Zener des diodes Zener de l'une de ces branches, dite deuxième branche, est choisie supérieure à la somme des tensions de Zener des diodes Zener de l'autre branche, dite première branche, de façon à ce que seules les diodes Zener de cette première branche conduisent en fonctionnement normal, c'est-à-dire en dehors de toute agression en courant résultant par exemple d'une rupture du câble véhiculant le courant de téléalimentation, et à ce que les diodes Zener de la deuxième branche conduisent seulement en cas d'agression.

Dans l'exemple illustré sur la figure 2, c'est la somme des tensions de Zener des diodes Zener de la branche B'2 qui est ainsi choisie supérieure à la somme des tensions de Zener des diodes Zener de la branche B'1. A titre d'exemple correspondant à l'application indiquée plus haut à la téléalimentation de répéteurs ou de régénérateurs, la tension de Zener des diodes Zener de la branche B'1 pourra être choisie égale à 6,2V et la tension de Zener des diodes Zener de la branche B'2 pourra être choisie égale à 8,2V.

En conséquence:
- les tensions d'alimentation positives des sous-ensembles fonctionnels E11 et E12, notées également respectivement +VE11 et +VE12, sont ici prises aux bornes de la même diode Zener DZ'11,
- les tensions d'alimentation négatives des sous-ensembles fonctionnels E11 et E12, notées également respectivement -VE11 et -VE12, sont ici prises aux bornes de la même diode Zener DZ'12,
- les tensions d'alimentation positives des sous-ensembles fonctionnels E21 et E22, notées également respectivement +VE21 et +VE22, sont ici prises aux bornes de la même diode Zener DZ'13,
- les tensions d'alimentation négatives des sous-ensembles fonctionnels E21 et E22, notées également respectivement -VE21 et -VE22, sont ici prises aux bornes de la même diode Zener DZ'14.

Par ailleurs, le potentiel de référence pour les sous-ensembles fonctionnels E11 et E12, noté également REF1, étant alors constitué par le point commun aux seules diodes Zener DZ'11 et DZ'12, et de même le potentiel de référence pour les sous-ensembles fonctionnels E21 et E22, noté également REF2, étant constitué par le point commun aux seules diodes Zener DZ'13 et DZ'14, chaque branche ne comporte plus ici qu'une seule résistance d'équilibrage, notée R'1 pour la branche B'1, R'2 pour la branche B'2 (ledit équilibrage n'étant ici nécessaire que si l'on veut obtenir une meilleure répartition du courant entre les deux branches en cas d'agression, du fait que les tensions de Zener sont différentes pour ces deux branches).

Il est bien entendu que lorsque lesdites résistances d'équilibrage sont présentes, ce qui est le cas sur la figure 2, la somme des tensions de Zener des diodes Zener de la branche B'2 doit être choisie supérieure à la somme des tensions de Zener des diodes Zener de la branche B'1, augmentée de la chute de tension aux bornes de la résistance R'1, de façon à ce que seules les diodes Zener de la branche B'1 conduisent en fonctionnement normal.

La résistance R'1 est en l'occurrence localisée sur celle des portions de la branche B'1 qui est comprise entre l'extrémité A de cette branche et le point au potentiel REF1, mais pourrait aussi être localisée sur celles des portions de cette branche qui est comprise entre le point au potentiel REF2 et l'extrémité C de cette branche. Cette résistance R'1 ne sera par contre avantageusement pas localisée sur celle des portions de cette branche qui est comprise entre les points aux potentiels REF1 et REF2, afin de ne pas accroître la différence de tension entre les points aux potentiels REF1 et REF2 en cas d'agression en courant.

La résistance R'2 peut être localisée en tout point de la branche B'2.

Avec un montage tel qu'illustré sur la figure 2 la différence de tension entre les points aux potentiels de référence REF1 et REF2, étant égale à la somme des tensions aux bornes des diodes Zener DZ'12 et DZ'13, reste sensiblement constante même en cas d'agression en courant due notamment à une rupture du câble véhiculant le courant de téléalimentation, d'où une simplification des problèmes d'isolement électrique entre ensembles fonctionnels et une possibilité de communication électrique entre ces ensembles fonctionnels.

Par ailleurs, en fonctionnement normal, la chute de tension aux bornes de ce dispositif est inférieure à ce qu'elle était dans le cas du dispositif de la figure 1, puisqu'elle est alors égale, pour les mêmes valeurs numériques, à (4 x 6,2V) + (1,6A x 2 Ω) soit 28V, d'où une réduction des pertes par échauffement.

On notera en outre que, comportant moins de résistances d'équilibrage que le dispositif de la figure 1, le dispositif de la figure 2 est plus économique.

On notera par ailleurs que le nombre de diodes Zener de celle des branches B'1 et B'2 dont les diodes Zener conduisent en fonctionnement normal (ici la branche B'1), dépend du nombre d'ensembles fonctionnels de l'équipement électronique considéré, alors que le nombre de diodes Zener de l'autre de ces branches ne dépend pas de ce nombre d'ensembles fonctionnels.

Plus généralement, la branche B'₂ comporte une ou plusieurs diodes Zener, le nombre de ces diodes Zener et leur tension de Zener étant déterminés, par rapport au nombre de diodes Zener et à la tension de Zener de la branche B'₁, de façon à ce que seules les diodes Zener de la branche B'₁ soient conductrices en fonctionnement normal, c'est-à-dire en l'absence de surintensité due notamment à une rupture du câble véhiculant le courant de téléalimentation, et à ce que la ou les diodes Zener de la branche B'2 soient conductrices seulement en présence d'une telle surintensité.

Par ailleurs, la branche B'2 peut comporter un ensemble de sous-branches en parallèle, cet ensemble pouvant se réduire à une seule sous-branche comme cela est le cas sur la figure 2.

Le cas d'un nombre de sous-branches supérieur à 1 permet de réduire, en cas d'agression, le courant dans chacune des branches B'1 et B'2.

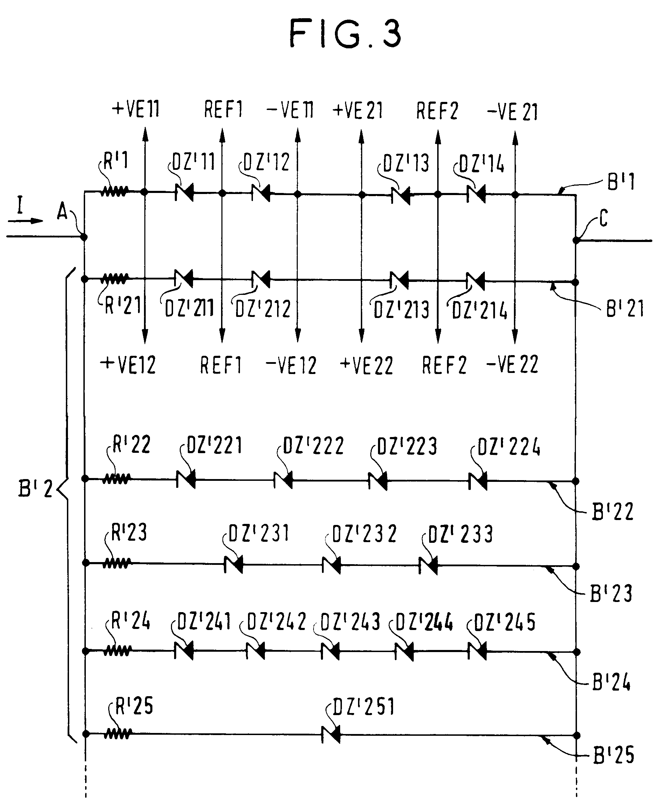

Dans le dispositif de téléalimentation illustré sur la figure 3, la branche B'2 comporte ainsi plusieurs sous-branches en parallèle, notées respectivement B'21, B'22, B'23, B'24, B'25 ...etc. Chaque sous-branche comporte une ou plusieurs diodes Zener, le nombre de ces diodes Zener et leur tension de Zener étant déterminés, par rapport au nombre de diodes Zener et à la tension de Zener des diodes Zener de la branche B'1, de façon à ce que seules les diodes Zener de la branche B'1 soient conductrices en fonctionnement normal, c'est-à-dire en l'absence de surintensité, et à ce que la ou les diodes Zener de chaque sous-branche B'21, B'22, B'23, B'24, B'25 ...etc soient conductrices seulement en présence d'une telle surintensité.

Chaque sous-branche comporte en outre, dans l'exemple illustré sur la figure 3, une résistance d'équilibrage, notée respectivement R'21, R'22, R'23, R'24, R'25...etc, afin d'obtenir là encore une meilleure répartition du courant en cas d'agression.

Dans l'exemple illustré plus particulièrement sur la figure 3, les sous-branches B'21 et B'22 sont identiques et comportent chacune quatre diodes Zener, notées respectivement DZ'211, DZ'212, DZ'213 et DZ'214 pour la sous-branche B'21 et DZ'221, DZ'222, DZ'223 et DZ'224 pour la sous-branche B'22, et les sous-branches B'23, B'24 et B'25 comportent respectivement trois diodes Zener, notées respectivement DZ'231, DZ'232 et DZ'233, cinq diodes Zener, notées respectivement DZ'241, DZ'242, DZ'243, DZ'244 et DZ'245 et une diode Zener, notée DZ'251.

## Revendications

**1/** Dispositif de téléalimentation pour équipement électronique, ledit équipement comportant un ou plusieurs ensembles fonctionnels alimentés en série par un courant dit de téléalimentation, chaque ensemble fonctionnel comportant à son tour une pluralité de sous-ensembles fonctionnels alimentés chacun par une ou plusieurs tensions formées à partir dudit courant de téléalimentation, avec un même potentiel de référence pour les différents sous-ensembles d'un même ensemble fonctionnel, ledit dispositif comportant deux branches (B'1, B'2) en parallèle dont l'une, dite première branche (B'1), comporte en série autant d'ensembles à diodes Zener, comportant chacun une ou plusieurs diodes Zener (DZ'11, DZ'12, DZ'13, DZ'14), que d'ensembles fonctionnels à alimenter, et ledit dispositif étant caractérisé en ce que l'autre de ces branches, dite deuxième branche (B'2), comporte une ou plusieurs sous-branches (B'21, B'22, B'23, B'24, B'25...) en parallèle comportant chacune une ou plusieurs diodes Zener (DZ'21, DZ'22, DZ'23, DZ'24 - DZ'211, DZ'212, DZ'213, DZ'214 - DZ'221, DZ'222, DZ'223, DZ'224 - DZ'231, DZ'232, DZ'233 - DZ'241, DZ'242, DZ'243, DZ'244, DZ'245 - DZ'251), le nombre de ces diodes Zener et leur tension de Zener étant, pour chaque sous-branche, déterminés, par rapport au nombre de diodes Zener et à la tension de Zener des diodes Zener de la première branche, de façon à ce que seules les diodes Zener de ladite première branche soient conductrices en fonctionnement normal, c'est-à-dire en l'absence de surintensité, et à ce que la ou les diodes Zener de chaque sous-branche soient conductrices seulement en présence d'une telle surintensité, et la ou les tensions d'alimentation des différents sous-ensembles d'un même ensemble fonctionnel étant prises aux bornes d'une même diode Zener, ou de mêmes diodes Zener d'un même ensemble à diodes Zener, de ladite première branche.

**2/** Dispositif selon la revendication 1, caractérisé en ce que ladite première branche et chaque sous-branche comportent en outre une résistance dite d'équilibrage (R'1, R'2, R'21, R'22, R'23, R'24, R'25).

**3/** Dispositif selon la revendication 2, caractérisé en ce que la résistance d'équilibrage (R'1) de ladite première branche (B'1) est localisée sur toute portion de cette branche non comprise entre deux points constituant les potentiels de référence de deux ensembles fonctionnels.

**4/** Dispositif selon l'une des revendications 2 et 3, caractérisé en ce que la résistance d'équilibrage (R'2, R'21, R'22, R'23, R'24, R'25) de chaque sous-branche est localisée sur toute portion de cette sous-branche.
